# FASCICULE DE BREVET EUROPEEN

(11) **EP 3 552 265 B1**
(45) Date de publication et mention de la délivrance du brevet: **03.02.2021**
(21) Numéro de dépôt: 17821695.8
(22) Date de dépôt: 08.12.2017
(51) Int. Cl.: H01M 8/1004, H01M 8/0273, H01M 8/0286, H01M 4/90, H01M 8/241, H01M 8/1018

(54) **PROCÉDÉ DE FABRICATION D'ASSEMBLAGE MEMBRANE-ÉLECTRODE POUR PILE À COMBUSTIBLE**
VERFAHREN ZUR HERSTELLUNG EINER MEMBRAN-ELEKTRODEN-EINHEIT FÜR EINE BRENNSTOFFZELLE
PROCESS OF MANUFACTURING A MEMBRANE-ELECTRODE ASSEMBLY FOR A FUEL CELL

(30) Priorité: 12.12.2016 FR 1662300
(43) Date de publication de la demande: 16.10.2019
(73) Titulaire: Compagnie Générale des Etablissements Michelin, 63000 Clermont-Ferrand (FR)
(72) Inventeur: BLANC, Claude, 63040 Clermont-Ferrand Cedex 9 (FR); GRANDJEAN, Arnaud, 63040 Clermont-Ferrand Cedex9 (FR)
(74) Mandataire: Noel, Luminita
(86) Numéro de dépôt international: PCT/FR2017/053465
(87) Numéro de publication internationale: WO 2018/109334

(56) Documents cités:
- EP-A1- 2 309 577
- EP-A1- 2 704 241
- US-A1- 2009 181 277
- US-A1- 2010 038 020

## Description

### DOMAINE DE L'INVENTION

La présente invention concerne le domaine des piles à combustibles, et plus particulièrement le domaine de la fabrication et de l'assemblage de piles à combustible.

Une pile à combustible permet la génération d'énergie électrique par une réaction électrochimique à partir d'un carburant, généralement de l'hydrogène, et d'un comburant, généralement de l'oxygène.

Une pile à combustible du type à membrane échangeuse de protons à électrolyte solide (PEMFC) comprend habituellement un empilement de cellules élémentaires, en forme de plaques, constituant des générateurs électrochimiques, chacune des cellules étant séparée des cellules adjacentes par des plaques bipolaires. Chaque cellule comprend un élément anodique et un élément cathodique, séparés par un électrolyte solide sous la forme d'une membrane échangeuse d'ions, réalisée par exemple en un matériau polymère perfluoré sulfuré.

Cet ensemble comprenant l'élément cathodique, l'élément anodique et l'électrolyte solide forme un assemblage membrane-électrode, également appelé AME. Selon une variante de réalisation habituelle, chaque plaque bipolaire assure d'un côté l'alimentation en carburant de la cellule adjacente à ce côté et de l'autre côté l'alimentation en comburant de la cellule adjacente à cet autre côté, les alimentations assurées par les plaques bipolaires se faisant en parallèle. Des couches de diffusion de gaz, par exemple réalisées en tissu de carbone, sont installées de part et d'autre des AME pour assurer la conduction électrique et l'arrivée homogène des gaz réactifs fournis via les plaques bipolaires.

Pour améliorer l'efficacité des réactions chimiques à l'anode et à la cathode, un catalyseur, généralement du platine, est utilisé dans l'empilement. Ce catalyseur peut être positionné soit sur la membrane, soit sur la couche de diffusion gazeuse.

Les techniques existantes de dépôt de catalyse sur une membrane ne sont pas satisfaisantes, car la membrane étant très sensible à l'humidité, elle a tendance à se rétracter lors d'un dépôt de catalyse sur une première face, ce qui rend difficile le dépôt de catalyse sur la seconde face de la membrane. Les documents US2010/0038020 et US2009/0181277 décrivent différentes méthodes de dépôt de catalyse sur les faces d'une membrane tenue par des renforts.

La présente invention vise propose ainsi un procédé de dépôt de catalyse sur une membrane polymère pour pile à combustible permettant de remédier aux inconvénients précités.

### BREVE DESCRIPTION DE L'INVENTION

Ainsi, l'invention concerne un procédé de fabrication d'un assemblage membrane-électrode pour pile à combustible, le procédé comprenant les étapes suivantes :
- Une première étape au cours de laquelle on dépose un renfort sur une première face d'une membrane échangeuse d'ions, la membrane étant maintenue sur un film support,
- Une deuxième étape au cours de laquelle on décolle la membrane du film support,
- Une troisième étape au cours de laquelle on dépose un renfort sur la seconde face de la membrane échangeuse d'ions, et
- Une quatrième étape au cours de laquelle on dépose un élément chimique catalyseur sur les parties laissées libres de la première et seconde faces de la membrane, la membrane étant maintenue sur sa périphérie par les éléments de renfort.

On précise ici que dans la suite de la description, l'expression « élément chimique catalyseur » pourra être remplacée par le terme « catalyse » par souci de simplification de l'exposé. Cet élément chimique catalyseur est préférentiellement une encre comprenant du platine, de l'eau et des solvants.

Cette invention permet ainsi de remédier aux inconvénients précités en proposant un procédé dans lequel la membrane est maintenue pendant les deux étapes de dépôt de catalyse, ce qui évite qu'elle se rétracte. En effet, lors de l'étape de dépôt de la catalyse, la membrane est maintenue sur sa périphérie par les éléments de renfort qui auront été installés au préalable. En effet, les éléments de renforts sont des films polymères qui viennent se positionner de manière à prendre en sandwich la bordure de la membrane sur toute sa périphérie, et qui laissent libre une partie centrale de la membrane

Ainsi, la catalyse doit ensuite être déposée non pas sur les éléments de renforts, mais uniquement sur la partie centrale de la membrane laissée libre. Pour ce faire, la quatrième étape est avantageusement mise en œuvre par un procédé permettant de réaliser un motif plutôt qu'une dépose en continue. Ainsi, cette quatrième étape est avantageusement effectuée par un procédé compris dans le groupe comprenant : la flexographie, la sérigraphie, le sprayage. Ces différents procédés seront ultérieurement détaillés à l'aide de figures.

On sait que dans un empilement de pile à combustible, il est nécessaire de positionner des joints de part et d'autre de chaque cellule élémentaire, et ce afin d'assurer une étanchéité de l'ensemble lors de l'empilement final. Dans un mode de réalisation de l'invention, les joints sont installés au préalable sur les éléments de renforts, avant l'insertion de la membrane. Un tel mode de réalisation présente deux avantages : tout d'abord, les joints étant installés avant l'insertion de la membrane, les étapes de polymérisation au four du joint ne sont pas subies par la membrane ; en outre, en cas de défaut lors de la fabrication du joint, on perd seulement un renfort, et pas la membrane. Toutefois, on a constaté que, selon le procédé employé pour la dépose de la catalyse, la présence d'une surépaisseur due aux joints pouvait être un inconvénient.

Pour remédier à cela, l'invention concerne également un procédé de fabrication d'une cellule élémentaire pour pile à combustible comprenant deux plaques bipolaires identiques, entourant un assemblage membrane électrode et deux couches de diffusion gazeuse, le procédé comprenant les étapes suivantes :
- On dépose, sur une enclume de découpe, une feuille d'un matériau utilisé pour la formation de joints pour pile à combustible,
- On installe deux pinces pour positionner la feuille sur la presse de découpe,
- On effectue une première découpe avec un outil dont le gabarit dépend de la forme des plaques bipolaires de la cellule élémentaire, cette première découpe visant à délimiter la forme intérieure du joint,
- On élimine les déchets de la première découpe tout en maintenant en place le joint grâce aux pinces,
- On installe un assemblage membrane-électrode fabriquée selon un procédé selon l'invention sur le joint,
- On effectue une seconde découpe avec un outil permettant de délimiter la forme extérieure du joint, et
- On élimine les déchets de la seconde découpe.

### BREVE DESCRIPTION DES FIGURES

D'autres objectifs et avantages de l'invention apparaîtront clairement dans la description qui va suivre d'un mode de réalisation préféré mais non limitatif, illustré par les figures suivantes dans lesquelles :
- la figure 1 présente un assemblage membrane-électrode pour pile à combustible,
- la figure 2 illustre un procédé de sérigraphie mis en œuvre dans un mode de réalisation de l'invention,
- la figure 3 illustre un procédé de flexographie mis en œuvre dans un mode de réalisation de l'invention,

### DESCRIPTION DU MEILLEUR MODE DE REALISATION DE L'INVENTION

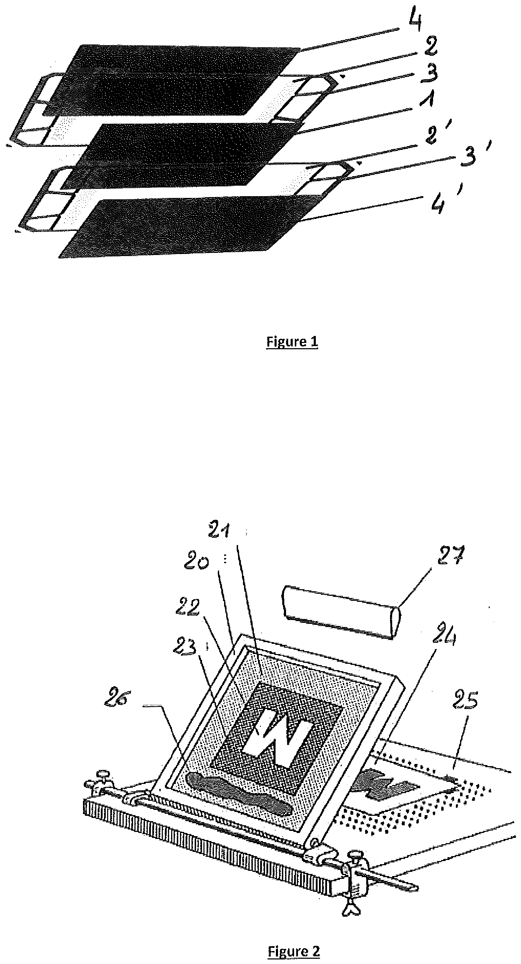

La figure 1 montre un assemblage membrane-électrode pour pile à combustible. Cet assemblage comprend une membrane échangeuse d'ions 1, des éléments de renfort 2 et 2', des joints 3 et 3', et des couches de diffusion gazeuse 4 et 4'.

Ainsi qu'indiqué en préambule de la présente demande, dans une pile à combustible on peut choisir de déposer la catalyse sur la membrane 1 ou sur les couches de diffusion gazeuse 4 et 4'. La présente invention concerne la première possibilité, à savoir le dépôt de la catalyse sur la membrane 1.

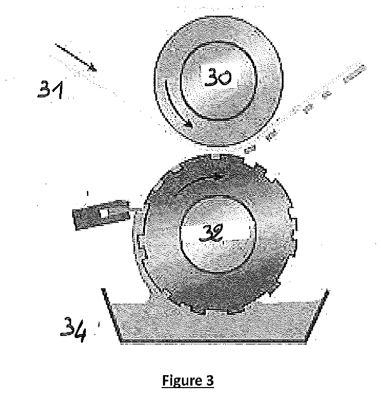

Ainsi, un procédé selon l'invention se déroule de la façon suivante :
- La membrane 1 est livrée sur un film support en un matériau plastique, par exemple du PET, et on vient apposer les renforts 2 et 2' de part et d'autre de la membrane,
- La membrane 1, portant les renforts, est ensuite catalysée sur chacune des faces ; Pour ce faire, on utilise un procédé permettant d'effectuer un dépôt sous forme de motifs, tel que la sérigraphie, qui sera décrit à l'aide de la figure 3, ou la flexographie qui sera décrit à l'aide de la figure 4,
- Les joints 3 et 3' sont ensuite installés en utilisant un procédé selon l'invention,
- Enfin, les couches de diffusion gazeuse 4 et 4' sont installées.

La figure 2 montre un système permettant la mise en œuvre d'un procédé de sérigraphie. Ce système comprend un écran ou cadre 20, formé d'un tissu en PET 21, également appelé treillis, dont les mailles et le diamètre de fil peuvent être adaptés aux différentes utilisations.

Pour la création du motif à réaliser, le tissu est enduit d'un produit photosensible appelé émulsion sur lequel est déposé un chablon correspondant au motif à réaliser. Dans le cas présent, le motif à réaliser correspond à la partie centrale d'une membrane échangeuse d'ions, laissée libre après l'installation des renforts.

Après avoir subi une exposition à une lampe UV, le produit photosensible durcit à l'exception de la zone masquée par le chablon. Le surplus est ensuite nettoyé. Ainsi, le treillis comporte alors des mailles ouvertes 22, formant le motif, et des mailles obturées 23.

Une fois ce cadre, ou écran, fabriqué, il est alors possible d'effectuer un dépôt de catalyse par sérigraphie. Pour ce faire, la membrane 24, catalysée sur une face, et portant les renforts, est installée sur le support 25, la face non catalysée étant installée vers le haut. L'écran 20 est alors positionné sur le support 25, au-dessus de la membrane 24. Une quantité suffisante de catalyse 26 est alors déposée sur le cadre, et étalé de façon régulière sur le motif mais sans appuyer trop fort pour éviter de lui faire traverser le treillis. Cette opération est appelée « le nappage ».

Puis, une racle 27 formée d'un profil de polyuréthane ou métallique dont la dureté et la raideur peuvent être adaptées, est passée tout le long du profil avec un angle variable proche de 45°. On précise ici que le cadre 20 est installé un peu au-dessus du support 25 de manière à éviter un contact entre les deux avant le passage de la racle.

La racle 27 va alors forcer le treillis 21 à se déformer, l'amenant au contact du support 32. La catalyse est ensuite forcée au passage de la racle à traverser le treillis pour venir se déposer sur la membrane 24.

La racle permet aussi de racler le surplus de catalyse à la surface de l'écran, celle-ci étant dès lors près pour une deuxième dépose.

La figure 3 permet d'illustrer un autre procédé pour effectuer ce dépôt sous forme de motif, à savoir un procédé de flexographie, également appelé « tampon encreur ». Le système montré en figure 4 comprend un rouleau de support 30, sur lequel est installé la membrane 31 à catalyser. Le système comprend également un rouleau encreur 32 sur lequel le motif à déposer est formé en surépaisseur. Le système comprend en outre une roulette 33 destinée à éliminer, après trempage dans le bac, l'encre présente sur les parties du rouleau encreur ne formant pas le motif.

Ainsi, lors du contact entre le rouleau de support 30 et le rouleau encreur 32, le motif dessiné sur le rouleau encreur 32 est transféré sur la membrane 31.

On constate, dans la description de procédés tels que la sérigraphie ou la flexographie, que la présence d'une surépaisseur sur la membrane pourrait poser des problèmes pour le dépôt de la catalyse. Ainsi, il apparaît judicieux d'effectuer le dépôt de catalyse avant l'installation des joints de chaque côté de la membrane.

Ainsi, dans un mode de réalisation particulier, les joints sont des joints plats déposés sur l'ensemble renfort-membrane catalysée - renfort. Nous allons décrire ci-après, un exemple de procédé de découpe et de dépôt de joints pouvant être mis en œuvre à cet effet.

## Revendications

1. Procédé de fabrication d'un assemblage membrane-électrode pour pile à combustible, le procédé comprenant les étapes suivantes :
- Une première étape au cours de laquelle on dépose un renfort (2) sur une première face d'une membrane (1) échangeuse d'ions, la membrane étant maintenue sur un film support,
- Une deuxième étape au cours de laquelle on décolle la membrane du film support,
- Une troisième étape au cours de laquelle on dépose un renfort (2') sur la seconde face de la membrane échangeuse d'ions, et
- Une quatrième étape au cours de laquelle on dépose un élément chimique catalyseur sur les parties laissées libres de la première et seconde faces de la membrane, la membrane étant maintenue sur sa périphérie par les éléments de renfort (2, 2').

2. Procédé de dépôt selon la revendication 1 dans lequel l'élément chimique catalyseur est une encre comprenant du platine, de l'eau et des solvants.

3. Procédé de dépôt selon la revendication 1 ou 2 dans lequel le film support est un film en matériau plastique, par exemple du PET.

4. Procédé de dépôt selon l'une des revendications précédentes dans lequel la quatrième étape est effectuée par un procédé compris dans le groupe comprenant : la flexographie, la sérigraphie et le sprayage.

5. Procédé selon l'une des revendications précédentes dans lequel les joints (3,3') sont présents sur les renforts.

6. Procédé de fabrication d'une cellule élémentaire pour pile à combustible comprenant deux plaques bipolaires identiques, entourant un assemblage membrane électrode et deux couches de diffusion gazeuse, le procédé comprenant les étapes suivantes :
- On dépose, sur une enclume de découpe, une feuille d'un matériau utilisé pour la formation de joints pour pile à combustible,
- On installe deux pinces pour positionner la feuille sur la presse de découpe,
- On effectue une première découpe avec un outil dont le gabarit dépend de la forme des plaques bipolaires de la cellule élémentaire, cette première découpe visant à délimiter la forme intérieure du joint,
- On élimine les déchets de la première découpe tout en maintenant en place le joint grâce aux pinces,
- On installe un assemblage membrane-électrode fabriqué selon un procédé selon l'une des revendications 1 à 5 sur le joint,
- On effectue une seconde découpe avec un outil permettant de délimiter la forme extérieure du joint,
- On élimine les déchets de la seconde découpe.

## Patentansprüche

1. Verfahren zur Herstellung einer Membran-Elektroden-Einheit für eine Brennstoffzelle, wobei das Verfahren die folgenden Schritte umfasst:
- einen ersten Schritt, in welchem ein Verstärkungselement (2) auf eine erste Seite einer Ionenaustauschermembran (1) aufgebracht wird, wobei die Membran auf einer Trägerfolie gehalten wird,
- einen zweiten Schritt, in welchem die Membran von der Trägerfolie gelöst wird,
- einen dritten Schritt, in welchem ein Verstärkungselement (2') auf die zweite Seite der Ionenaustauschermembran aufgebracht wird, und
- einen vierten Schritt, in welchem ein chemisches Katalysator-Element auf die frei gelassenen Teile der ersten und der zweiten Seite der Membran aufgebracht wird, wobei die Membran an ihrem Umfang durch die Verstärkungselemente (2, 2') gehalten wird.

2. Verfahren zur Aufbringung nach Anspruch 1, wobei das chemische Katalysator-Element eine Druckfarbe ist, welche Platin, Wasser und Lösungsmittel umfasst.

3. Verfahren zur Aufbringung nach Anspruch 1 oder 2, wobei die Trägerfolie eine Folie aus Kunststoff ist, zum Beispiel aus PET.

4. Verfahren zur Aufbringung nach einem der vorhergehenden Ansprüche, wobei der vierte Schritt mit einem Verfahren ausgeführt wird, das in der Gruppe enthalten ist, welche umfasst: Flexodruck, Siebdruck und Sprühen.

5. Verfahren nach einem der vorhergehenden Ansprüche, wobei die Dichtungen (3, 3') auf den Verstärkungselementen vorhanden sind.

6. Verfahren zur Herstellung einer Elementarzelle für eine Brennstoffzelle, welche zwei identische Bipolarplatten umfasst, die eine Membran-Elektroden-Einheit und zwei Gasdiffusionsschichten umgeben, wobei das Verfahren die folgenden Schritte umfasst:
- Auf einen Schneidamboss wird eine Platte eines Materials aufgelegt, das für die Bildung von Dichtungen für die Brennstoffzelle verwendet wird,
- es werden zwei Zangen angebracht, um die Platte auf der Stanzpresse zu positionieren,
- es wird ein erster Schnitt mit einem Werkzeug ausgeführt, dessen Profil von der Form der Bipolarplatten der Elementarzelle abhängt, wobei dieser erste Schnitt dazu dient, die innere Form der Dichtung zu begrenzen,
- es werden die Abfälle des ersten Schnittes entfernt, während gleichzeitig die Dichtung mithilfe der Zangen in ihrer Position gehalten wird,
- es wird eine Membran-Elektroden-Einheit, die gemäß einem Verfahren nach einem der Ansprüche 1 bis 5 hergestellt wurde, auf der Dichtung angebracht,
- es wird ein zweiter Schnitt mit einem Werkzeug ausgeführt, welches ermöglicht, die äußere Form der Dichtung zu begrenzen,
- es werden die Abfälle des zweiten Schnittes entfernt

## Claims

1. Method for manufacturing a membrane-electrode assembly for a fuel cell, the method comprising the following steps:
- A first step during which a reinforcement (2) is deposited on a first face of an ion-exchanging membrane (1), the membrane being held on a support film,
- A second step during which the membrane is unglued from the support film,
- A third step during which a reinforcement (2') is deposited on the second face of the ion-exchanging membrane, and
- A fourth step during which a chemical catalyst element is deposited on the parts left free of the first and second faces of the membrane, the membrane being held on its periphery by the reinforcing elements (2,2').

2. Deposition method according to Claim 1, wherein the chemical catalyst element is an ink comprising platinum, water and solvents.

3. Deposition method according to Claim 1 or 2, wherein the support film is a film made of plastic material, for example of PET.

4. Deposition method according to one of the preceding claims, wherein the fourth step is performed by a method included in the group comprising: flexography, screenprinting and spraying.

5. Method according to one of the preceding claims, wherein the seals (3, 3') are present on the reinforcements.

6. Method for manufacturing an elementary cell for a fuel cell comprising two identical bipolar plates, surrounding a membrane-electrode assembly and two gas diffusion layers, the method comprising the following steps:
- A sheet of a material used for forming seals for a fuel cell is placed on a cutting anvil,
- Two clamps are installed for positioning the sheet on the cutting press,
- A first cutting is performed with a tool whose template depends on the form of the bipolar plates of the elementary cell, the purpose of this first cutting being to delimit the internal form of the seal,
- The waste from the first cutting is eliminated while keeping the seal in place by virtue of the clamps,
- A membrane-electrode assembly manufactured according to a method according to one of Claims 1 to 5 is installed on the seal,
- A second cutting is performed with a tool making it possible to delimit the outer form of the seal,
- The waste from the second cutting is eliminated.
